# EUROPÄISCHE PATENTSCHRIFT

(11) **EP 0 617 493 B1**
(45) Veröffentlichungstag und Bekanntmachung des Hinweises auf die Patenterteilung: **28.08.1996**
(21) Anmeldenummer: 93119162.1
(22) Anmeldetag: 27.11.1993
(51) Int. Cl.: H02G 3/06

(54) **Verbindungseinrichtung für Gitterrinnen**
Connection device for wire channels
Dispositif de liaison pour gouttieres en grille

(30) Priorität: 26.03.1993 DE 4309862
(43) Veröffentlichungstag der Anmeldung: 28.09.1994
(73) Patentinhaber: Rieth & Co. GmbH, D-73230 Kirchheim (DE)
(72) Erfinder: Fink, Ewald, D-73095 Albershausen (DE)
(74) Vertreter: Rüger, Rudolf, Dr.-Ing.

(56) Entgegenhaltungen:
- DE-A- 2 036 325

## Beschreibung

Gitterrinnen dienen dem Verlegen von elektrischen Kabeln, Lichtleiterkabeln, dünnen Rohren und ähnlichem innerhalb von Gebäuden. Jede Gitterrinne besteht aus einer Anzahl von parallel und im Abstand nebeneinander angeordneten Runddrähten, die über die Länge der jeweiligen Kabelrinne ungeschnitten durchlaufen. Quer zu diesen in Längsrichtung liegenden Drähten sind quer verlaufende Verbindungsdrähte vorgesehen, die an den Kreuzungsstellen mit den in Längsrichtung liegenden Drähten verschweißt sind. Die quer verlaufenden Verbindungsdrähte sind entsprechend der Querschnittsprofilgestalt der Gitterrinne gebogen. Jeweils an den Stirnseiten befindet sich je ein quer verlaufender Verbindungsdraht, über den die in Längsrichtung liegenden Drähte möglichst nicht überstehen sollen. Aus fertigungstechnischen Gründen ist dies jedoch nicht immer zu gewährleisten, falls keine aufwendigen Nachbearbeitungen an der Stirnseite der Gitterrinnen vorgenommen werden sollen.

Diese Überstände behindern das fluchtende Ausrichten benachbarter Gitterrinnen an der Stoßstelle. Bei der bekannten Verbindungstechnik werden deswegen die Gitterrinnen auf einen kleinen Abstand zueinander gehalten.

Eine aus der Praxis bekannte Verbindungseinrichtung besteht aus zwei im Querschnitt C-förmigen Schienen, deren Querabmessungen so aufeinander abgestimmt sind, daß die eine Schiene zwischen den seitlich aufragenden Schenkeln der anderen Schiene Platz findet. Diese Schienen, deren Länge kleiner ist als der Abstand der benachbarten, in Längsrichtung der Gitterringe verlaufenden Runddrähte, haben mittig jeweils eine Bohrung, durch die im montierten Zustand eine Schloßschraube (Flachrundkopfschraube mit Vierkantansatz) hindurchführt (siehe DE-A-20 36 325).

Bei der Montage dieser Verbindungseinrichtung wird von oben her die in der Querabmessung kleinere Schiene mit der eingesteckten Schloßschraube voraus auf die miteinander zu verbindenden Rinnen aufgelegt. Sodann wird von unten her die äußere Schiene aufgesetzt, ehe eine Mutter unter Zwischenlage einer Beilagscheibe auf den Gewindeschaft der Schloßschraube aufgedreht werden kann. Dabei dient der Vierkantansatz der Schloßschraube dazu, einerseits den gewünschten Abstand an der Stoßstelle zwischen den Gitterrinnen zu erzwingen und andererseits ein Mitdrehen der Schloßschraube beim Anziehen der Mutter zu verhindern.

Die Montage dieses bekannten Verbindungselementes ist schwierig, wenn man berücksichtigt, daß der Monteur in aller Regel in verhältnismäßog großer Höhe auf einer Leiter arbeiten muß.

Ausgehend hiervon ist es Aufgabe der Erfindung, eine Verbindungseinrichtung für Gitterrinnen zu schaffen, die bei der Montage an der Stoßstelle der Gitterrinnen nicht in Einzelteilen zerlegt angebracht werden muß.

Diese Aufgabe wird erfindungsgemäß durch die Verbindungseinrichtung mit den Merkmalen des Anspruches 1 bzw. durch die Verbindungseinrichtung mit den Merkmalen des Anspruches 4 gelöst.

Bei der Ausführungsform nach dem Anspruch 1 wird der Abstand zwischen den Gitterrinnen zwangsläufig durch den Gewindeschaft der Hammerschraube hergestellt, wobei die äußeren Leisten dafür sorgen, daß beim Anziehen der Mutter die Verdrehsicherung wirksam wird. Die seitlichen Leisten an der Verbindungsplatte verhindern ein seitliches Wegdrücken der Gitterrinnen durch die Verdrehsicherung.

Infolge des länglichen Kopfes der Hammerschraube ist ohne weiteres eine Vormontage möglich, so daß beim Anbringen des Verbindungselementes an der Stoßstelle nur eine Ausrichtung des Kopfes der Hammerschraube parallel zu den stirnseitigen Drähten der Gitterrinnen erforderlich ist, um den Kopf zwischen die Drähte einzuschieben. Beim nachträglichen Festziehen der Mutter dreht sich die Hammerschraube solange, bis die Verdrehsicherung wirksam wird. Sodann bewirkt eine weitere Verdrehung nur noch, daß der Kopf an die stirnseitigen Drähte der beiden Gitterrinnen herangezogen wird.

Ein Einstecken der Hammerschraube und ein Aufsetzen der Mutter erst an der Montagestelle ist bei der neuen Lösung nicht erforderlich.

Anstelle der Hammerschraube, die sowohl den Abstand zwischen den Gitterrinnen herstellt als auch die Verbindungsplatte an den Gitterrinnen sichert, ist auch eine einstückige Lösung möglich, wobei die Verbindungsplatte ein Blechformteil ist, an dem zusätzlich zwei Laschen ausgebildet sind, die den Abstand zwischen den Gitterrinnen gewährleisten. Die Biegeelemente werden nach dem Ansetzen mittels einer Zange um die Drähte herumgebogen und halten so das Verbindungselement sicher fest. Die auftretenden Zugkräfte werden in jedem Falle von den Leisten der Verbindungsplatte aufgenommen.

In der Zeichnung sind Ausführungsbeispiele des Gegenstandes der Erfindung dargestellt. Es zeigen:
- Fig. 1: zwei miteinander zu verbindende Gitterrinnen sowie ein Verbindungselement in einer perspektivischen Explosionsdarstellung mit jeweils unterschiedlichem Maßstab für das Verbindungselement und die Gitterrinnen,
- Fig. 2: die Anordnung nach Fig. 1 in einer Draufsicht,
- Fig. 3: die Hammerschraube der Verbindungseinrichtung nach Fig. 1 in einer vergrößerten Darstellung, in einer Stirnansicht auf den Gewindeschaft und
- Fig. 4: ein anderes Ausführungsbeispiel des erfindungsgemäßen Verbindungselementes, das durch Biegen zu befestigen ist.

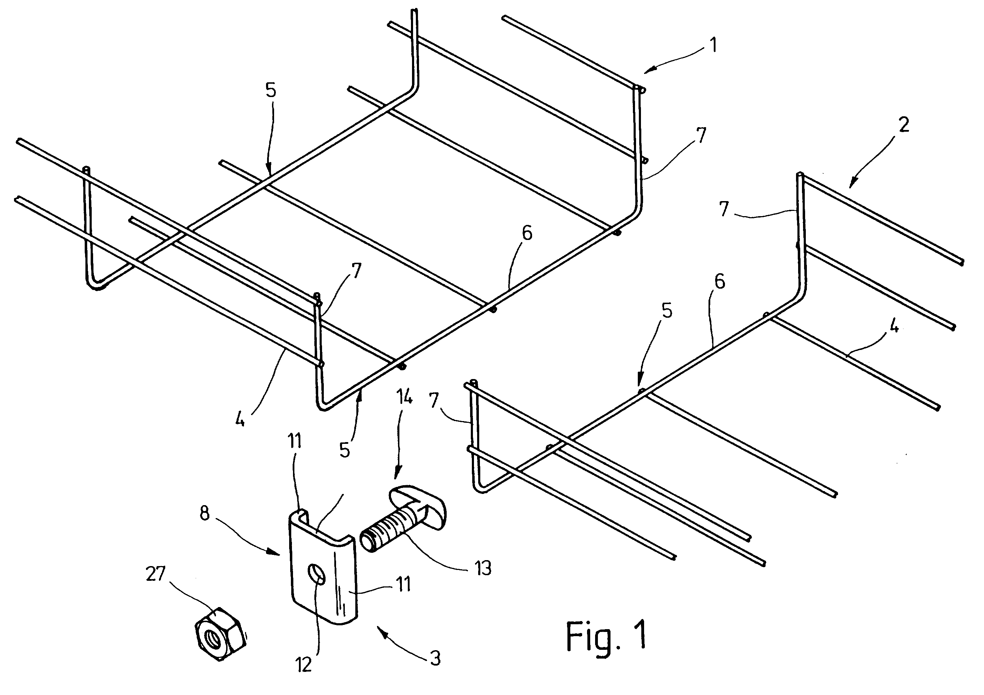

Fig. 1 zeigt zwei miteinander zu verbindende Gitterrinnen 1, 2, die im Gebrauch auf Stoß miteinander zu verbinden sind, wozu mehrere, vorzugsweise wenigstens drei Verbindungseinrichtungen 3 verwendet werden. Die Verbindungseinrichtung 3 ist in Fig. 1 in einem vergrößerten Maßstab, verglichen mit den Gitterrinnen, veranschaulicht, um das Wesentliche erkennen zu lassen.

Die Gitterrinnen 1, 2 sind untereinander gleich ausgebildet und bestehen aus einer Vielzahl von in Längsrichtung durchlaufenden und zueinander parallelen Runddrähten 4. Diese Runddrähte 4 sind an quer verlaufenden Verbindungsdrähten 5 befestigt, wobei die Verbindungsdrähte 5 entsprechend dem C-förmigen Rinnenprofil gebogen sind. Die quer verlaufenden Verbindungsdrähte 5 weisen dementsprechend einen dem Boden der Gitterrinne entsprechenden geraden Abschnitt 6 auf, der beidends in nach oben aufragende Schenkel 7 übergeht. Die Schenkel 7 sorgen bei der fertigen Gitterrinne zur Erzeugung von deren Seitenwänden. Die quer verlaufenden Verbindungsdrähte 6 und die Längsdrähte 4 sind jeweils an den Kreuzungsstellen miteinander verschweißt.

Bei jeder der Gitterrinnen 1, 2 liegt jeweils ein quer verlaufender Verbindungsdraht 5 unmittelbar an der Stirnseite, so daß die Längsdrähte 4 möglichst wenig über diesen quer verlaufenden Verbindungsdraht überstehen, andererseits an demselben noch sicher zu befestigen sind.

Die Verbindungseinrichtung 3 umfaßt ein C-förmig gebogenes Blechteil 8, das eine etwa rechteckige Verbindungsplatte 9 aufweist, an deren parallel zueinander verlaufenden länglichen Kanten zwei in gleicher Richtung weisende gerade Leisten 11 angeformt sind. Diese Leisten 11 verlaufen parallel zueinander und haben einen Abstand, wie er sich aus der nachfolgenden Funktionsbeschreibung ergibt.

In der Verbindungsplatte 9 ist ferner mittig zwischen den beiden Leisten 11, die gegenüber der Verbindungsplatte 9 rechtwinklig abgewinkelt sind, eine Bohrung 12 enthalten, durch die ein Gewindeschaft 13 einer Hammerschraube 14 führt.

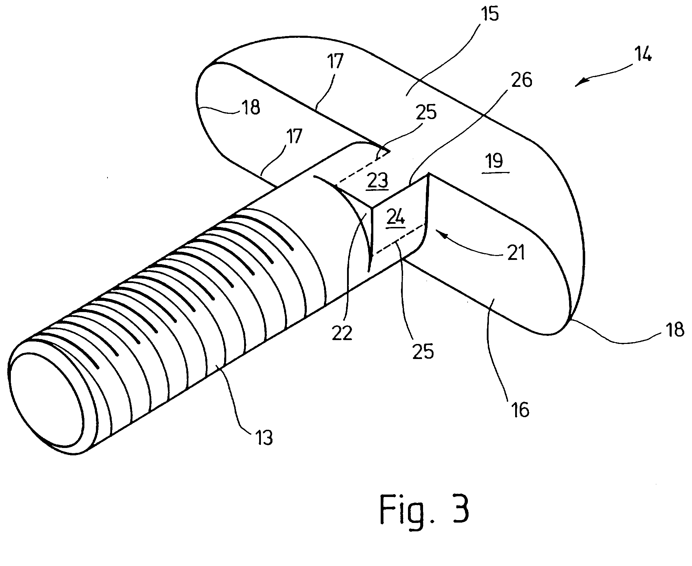

Die Hammerschraube 14 trägt, wie dies die vergrößerte Darstellung in Fig. 3 erkennen läßt, auf ihrem Gewindeschaft 13 einen quer verlaufenden, länglichen, schmalen und damit hammerförmigen Kopf 15. Dieser ist an seiner Unterseite, also der dem Gewindeschaft 13 zugekehrten Seite, mit einer im wesentlichen planen und zu der Längsachse des Gewindeschaftes 13 rechtwinkligen Anlagefläche 16 versehen, die sich zu beiden Seiten des Gewindeschaftes 13 erstreckt.

Der Kopf 15 hat in der Draufsicht auf die Anlagefläche 16 die Gestalt eines länglichen Rechtecks, begrenzt durch zwei lange Kanten 17, wobei die sich zwischen den langen Kanten 17 erstreckenden kurzen Kanten 18 konvex abgerundet gekrümmt sind. Mit anderen Worten, die Auflagefläche 16 hat etwa die Gestalt eines langgestreckten Ovals, wobei in der Mitte dieser so gebildeten Fläche der Gewindeschaft 13 sich erhebt.

Im Anschluß an die Kanten 17 weist der Kopf 15 Seitenflächen 19 auf, die, ausgehend von den Kanten 17, zunächst zueinander parallel und dann im Abstand zu den Kanten 17 aufeinander zu, gekrümmt sind. Somit hat der Kopf 15 an keiner Stelle größere Abmessungen als es durch die Kanten 17 festgelegt ist.

Der Abstand zwischen den Kanten 17 ist gleich dem Nenndurchmesser des Gewindeschaftes 13.

Zwischen dem Gewindeschaft 13 und dem Kopf 15 ist die Hammerschraube 14 mit einer Verdrehsicherung 21 versehen. Diese Verdrehsicherung 21 besteht aus zwei Fortsätzen 22, die sich bezüglich des Gewindeschaftes 13 diametral gegenüberliegen (der andere Fortsatz 22 ist durch den Gewindeschaft 13 verdeckt). Jeder dieser beiden Fortsätze 22 ist von zwei ebenen Flächen 23 und 24 begrenzt, die tangential in einen unmittelbar an den Kopf 15 angrenzenden gewindelosen Bereich des Gewindeschaftes 13 glatt übergehen und dort an einer gedachten geraden Linie 25 enden, die ein Ausschnitt aus einer entsprechenden Mantellinie des Gewindeschaftes 13 ist. Die beiden Flächen 23 und 24 führen mit entgegengesetztem Drehsinn von dem Gewindeschaft 13 weg und gehen an einer Kante 26, die ebenfalls parallel zu einer Mantellinie des Gewindeschaftes 13 liegt, ineinander über. Die Flächen 23 und 24 schließen einen Winkel von 90^{o} miteinander ein.

Da die Breite des Kopfes 15, gemessen zwischen den Kanten 17 gleich dem Durchmesser des Gewindeschaftes 13 ist, und die ebene Fläche 23 tangential in den Gewindeschaft 13 einmündet, geht die Fläche 23 auch glatt in die Seitenfläche 19 des Kopfes 15 über. Die Seitenfläche 24 dagegen steht senkrecht auf der Auflagefläche 16.

Die Länge der Flächen 23 und 24, gemessen in Richtung parallel zu der Achse des Gewindeschaftes 13, ist mindestens halb so groß wie der Durchmesser der quer verlaufenden Runddrähte 5, jedoch kürzer als deren Durchmesser.

Da sich die beiden gleich gestalteten Fortsätze 22 diametral gegenüberliegen, hat die Hammerschraube 14 im Bereich der Verdrehsicherung 21 einen etwa augenförmigen Querschnitt.

Zwischen den beiden Fortsätzen 22, also links von der Linie 25 der Fläche 23 und rechts bzw. unterhalb der Linie 25 der Fläche 24, folgt die Außenkontur bis zu dem diametral gegenüberliegenden nicht sicht sichtbaren Fortsatz einer glatten zylindrischen Gestalt.

Schließlich gehört zu der Verbindungseinrichtung 3 noch eine auf den Gewindeschaft 13 aufschraubbare Mutter 27, die vorzugsweise als selbstsichernde Mutter ausgebildet ist.

Die Handhabung der Verbindungseinrichtung 3 zum Verbinden der beiden Gitterrinnen 1 und 2 ist wie folgt:

Zunächst werden die Verbindungseinrichtungen 3 durch Vormontage vorbereitet, indem der Gewindeschaft 13 in die Bohrung 12 eingesteckt wird. Das Einführen des Gewindeschaftes 13 erfolgt von der Seite der Leisten 11 her, so daß sich der Kopf 15 der Hammerschraube 14 auf derselben Seite der Verbindungsplatte 9 befindet wie die Leiste 11. Auf das aus der Bohrung 12 vorstehende Ende des Gewindeschaftes 13 wird die Mutter 27 ein Stück weit aufgeschraubt, höchstens jedoch so weit, daß der freie Abstand zwischen der Verbindungsplatte 9 und der Auflagefläche 16 des Kopfes 15 noch größer ist als der Durchmesser der im Querschnitt kreisrunden Verbindungsdrähte 5.

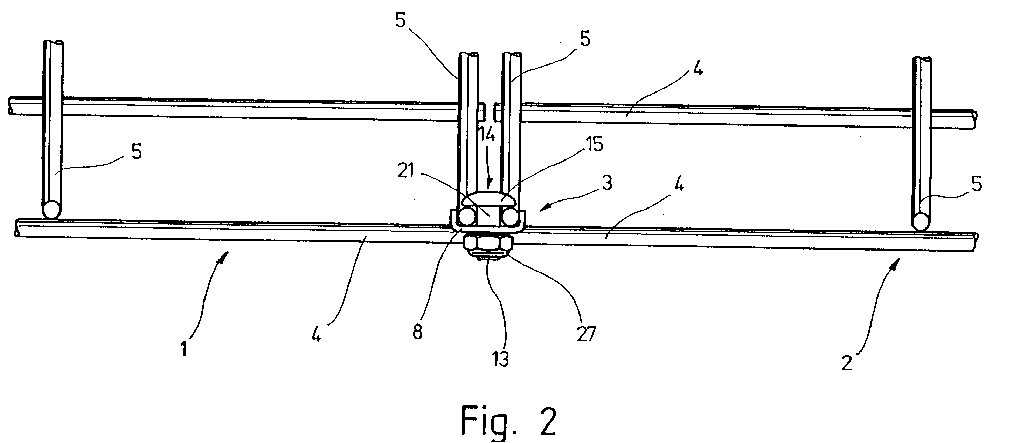

Nun können mit den so vorbereiteten Verbindungseinrichtungen 3 die auf nicht weiter gezeigten Auslegern verlegten Gitterrinnen 1 und 2 auf Stoß miteinander verbunden werden. Dazu wird der Kopf 15 zwischen die beiden benachbarten Verbindungsdrähte 5 an den Stirnseiten der beiden Gitterrinnen 1 und 2 eingeführt und die Verbindungsplatte 9 zur Anlage an den entsprechenden miteinander fluchtenden Abschnitten der Verbindungsdrähte 5 gebracht. Die beiden Leisten 11 umgreifen dabei seitlich, wie dies Fig. 2 erkennen läßt, die Verbindungsdrähte 5. Sie verhindern, daß die beiden Verbindungsdrähte 5 sich weiter voneinander entfernen können als es dem Durchmesser des Gewindeschaftes 13 entspricht.

Wenn bei der Vormontage die Mutter 27 weit genug aufgeschraubt war, befindet sich jetzt bereits die Verdrehsicherung 21 zwischen den Verbindungsdrähten 5. Das Betätigen der Mutter 27 im Sinne eines Festziehens der Hammerschraube 14 dreht zunächst die Hammerschraube 14 solange mit, bis ihre Verdrehsicherung 21 wirksam wird,d.h. bis bei einer Schraube mit Rechtsgewinde die Fläche 24 der beiden Fortsätze 22 an den beiden benachbarten Verbindungsdrähten 5 anstößt. Hierdurch wird ein weiteres Mitdrehen der Hammerschraube 14 um ihre Längeachse verhindert, da andererseits die beiden Verbindungsdrähte 5 an den benachbarten Leisten 11 anliegen und von dem Fortsatz 22 nicht mehr seitlich weggedrängt werden können. Gleichzeitig wird sichergestellt, daß der Kopf 15 quer zu den beiden aneinander zu befestigenden Verbindungsdrähten 5 ausgerichtet ist und mit seiner Anlagefläche 16 diese beiden Verbindungsdrähte 5 zumindest teilweise überdeckt. Ein weiteres Betätigen der Mutter 27 hat deswegen ein Anziehen der Hammerschraube 14 zur Folge, wodurch der Kopf 15 unter Zwischenlage der Verbindungsdrähte 5 gegen die Verbindungsplatte 9 des Blechformteils 8 verspannt wird.

Mit der nächsten Verbindungseinrichtung 3, die an demselben Stoß angebracht wird, wird, wie oben beschrieben, verfahren. Dabei ermöglicht es der hammerförmige Kopf 15, daß er bei vormontierter Verbindungseinrichtung 3 ohne weiteres in den Spalt zwischen den benachbarten Verbindungsdrähten 5 an der Stirnseite der beiden Gitterrinnen 1 und 2 eingeschoben werden kann. Dazu braucht der Kopf 15 der Hammerschraube 14 nur parallel zu den Verbindungsdrähten 5 ausgerichtet zu werden. Er kann sodann zwischen den Verbindungsdrähten 5 durchgeschoben werden, bis die Verbindungsplatte 9 an den Verbindungsdrähten 5 anliegt.

Die neue Verbindungseinrichtung 3 erfordert es nicht, daß die einzelnen die Verbindungseinrichtung 3 bildenden Teile erst nacheinander an der Stoßstelle zwischen den beiden Gitterrinnen 1 und 2 zusammenmontiert werden müssen. Vielmehr ist, wie sich aus der obigen Beschreibung ergibt, jederzeit die Vormontage möglich und es genügt, nach dem Auf- bzw. Einstecken der Verbindungseinrichtung 3 die Mutter 28 anzuziehen. Ein weiteres Werkzeug zum Gegenhalten ist ebenfalls nicht erforderlich, weil die Verdrehsicherung 21 ein unerwünschtes Mitdrehen der Hammerschraube 14 verhindert.

Außerdem ist aus der Funktionsbeschreibung ohne weiteres zu erkennen, daß der lichte Abstand zwischen dem Gewindeschaft 13 und der benachbarten Innenseite der jeweiligen Leiste 11 etwa gleich dem Durchmesser der Verbindungsdrähte 5 ist. Der Durchmesser des Gewindeschaftes 13 legt dagegen fest, welchen Abstand die an der Stirnseite befindlichen Verbindungsdrähte 5 der beiden Gitterrinnen 1 und 2 voneinander haben. Somit ist die lichte Weite, gemessen zwischen den beiden Leisten 11, wie sich aus Fig. 2 ergibt, gleich dem über alles gemesenen Außenabstand der beiden Verbindungsdrähte 5 an dieser Stelle oder mit anderen Worten gleich der Summe der Durchmesser der Verbindungsdrähte 5 zuzüglich dem Durchmesser des Gewindeschaftes 13.

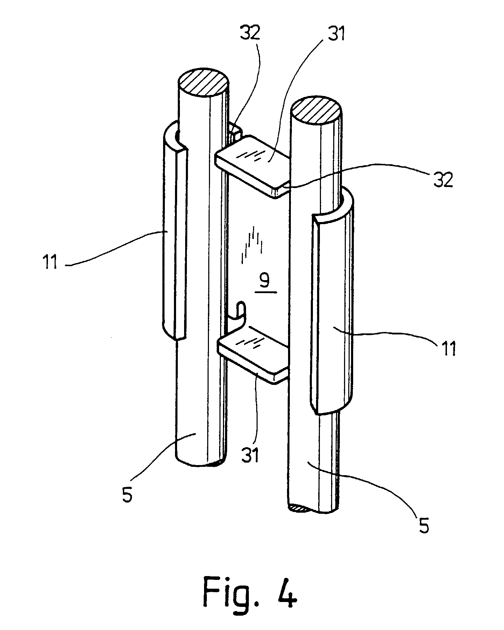

Ein weiteres Ausführungsbeispiel der neuen Verbindungseinrichtung 3 ist in Fig. 4 perspektivisch gezeigt. Bei diesem Ausführungsbeispiel haben die beiden Leisten 11, die an der Verbindungsplatte 9 angeformt sind, eine Höhe gegenüber der Verbindungsplatte 9, die deutlich größer ist als der Durchmesser der betreffenden Verbindungsdrähte 5. Außerdem ist zwischen den beiden Leisten 11 an den anderen beiden Kanten der Verbindungsplatte 9 jeweils eine Lasche 31 angeformt, die sich rechtwinklig über der Verbindungsplatte 9 in derselben Richtung erhebt wie die beiden Leisten 11. Diese beiden Laschen 31 dienen als Distanzstücke und haben die Aufgabe, die beiden Verbindungsdrähte 5 an der Stoßstelle auf Abstand zu halten, wie dies vorher mit Hilfe des Gewindeschaftes 13 geschehen ist.

Die Handhabung dieser Verbindungseinrichtung 3 nach Fig. 4 geschieht in der Weise, daß auf die stirnseitigen Verbindungsdrähte 5 der beiden miteinander zu kuppelnden Gitterrinnen 1 und 2 die Verbindungseinrichtung 3 aufgesteckt wird. Sodann werden die beiden Leisten 11 und 12, die über die Verbindungsdrähte 5 deutlich überstehen, mit einer Zange herumgebogen, bis sich die in Fig. 4 gezeigte Anordnung ergibt. Da die Leisten 11 ursprünglich über ihre gesamte Fläche zueinander parallel und rechtwinklig zu der ebenen Verbindungsplatte 9 ausgerichtet waren, konnte die Verbindungseinrichtung 3 ohne weiteres aufgesteckt werden. Nach dem Umformen der Leisten 11 entsprechend Fig. 4 ist die Verbindungseinrichtung 3 an den beiden Gitterrinnen 1 und 2 gesichert.

Der Abstand zwischen den unverformten Leisten 11 ist entsprechend dem vorhergehenden Ausführungsbeispiel dimensioniert, d.h. er ist gleich dem doppelten Durchmesser des Verbindungsdrahtes 5 zuzüglich der Breite der Lasche 31, gemessen in Richtung des Abstandes zwischen den beiden Leisten 11.

Damit möglichst keine zusätzlichen Austreibkräfte entstehen, wenn die beiden Gitterrinnen 1 und 2 aufeinander zugedrückt werden, haben die beiden Laschen 31, wie in Fig. 4 gezeigt, zweckmäßigerweise zwei parallel zueinander verlaufende Seitenkanten 32, die als Anlage für die beiden Verbindungsdrähte 5 dienen.

Es ist jedoch nicht erforderlich, zwei dieser Laschen 31 zu verwenden, die an den Rändern der Verbindungsplatte 9 sitzen, sondern es ist auch möglich, aus der Mitte der Verbindungsplatte 9 eine einzige Lasche 31 auszuklinken, die sich nach dem Umbiegen etwa in derselben Position befindet wie bei dem vorherigen Ausführungsbeispiel der Gewindeschaft 13.

## Patentansprüche

1. Verbindungseinrichtung (3) zum Verbinden benachbarter Gitterrinnen (1, 2), die an der Verbindungsstelle auf Stoß angeordnet sind und an ihrer dem Stoß benachbarten Stirnseite einen dem Gitterrinnenprofil entsprechend gebogenen Draht (5) aufweisen,
mit einer Verbindungsplatte (9), die zwei zueinander parallele und voneinander beabstandete gerade Leisten (11) trägt, die zusammen mit der Verbindungsplatte (9) ein C-förmiges Profil bilden und mittig zwischen den Leisten (11) eine Öffnung (12) enthält, wobei der lichte Abstand zwischen den Leisten (11) gleich dem über beide Drähte (5) gemessenen Abstand der an dem Stoß benachbarten stirnseitigen Drähte (5) ist,
mit einer Hammerschraube (14), die einen länglichen Kopf (15), einen damit einstückigen Gewindeschaft (13) und eine Verdrehsicherung (21) aufweist, wobei der Gewindeschaft (13) sowie die Verdrehsicherung (21) einen wirksamen Durchmesser haben, der gleich dem Sollabstand der Gitterrinnen (1, 2) an der Stoßstelle ist und bei in der Öffnung (12) eingeführten Gewindeschaft (13) der Kopf (15) auf derselben Seite der Verbindungsplatte (9) liegt wie die Leisten (11), und
mit einer auf den Gewindeschaft aufgeschraubten Mutter (27).

2. Einrichtung nach Anspruch 1, bei der die Mutter (27) eine selbstsichernde Mutter ist.

3. Einrichtung nach Anspruch 1, bei der an der Verbindungsplatte (9) zusätzlich zwei Laschen angeformt sind, die sich mit der Bohrung (12) auf einer Geraden befinden.

4. Verbindungseinrichtung (3) zum Verbinden benachbarter Gitterrinnen (1, 2), die an der Verbindungsstelle auf Stoß angeordnet sind und an ihrer dem Stoß benachbarten Stirnseite einen dem Gitterrinnenprofil entsprechend gebogenen Draht (5) aufweisen,
mit einer aus einem Blechformteil (8) bestehenden Verbindungsplatte (9),
mit einer Anlagefläche für die Drähte (5),
mit zwei zueinander parallelen und voneinander beabstandeten gerade Leisten (11), die zusammen mit der Verbindungsplatte (9) ein C-förmiges Profil bilden und deren lichter Abstand voneinander gleich dem über alles beide Drähte gemessennen Abstand der an dem Stoß benachbarten stirnseitigen Drähte (5) ist,
mit zwei voneinander beabstandete Laschen (31), die mittig zwischen den Leisten (11) angeordnet sind und sich in dieselbe Richtung erstrecken wie die Leisten (11), wobei der freie Abstand zwischen einer Leiste (11) und der benachbarten Kante (32) der Lasche (31) gleich dem Drahtdurchmesser ist und die Breite jeder Lasche (31) gemessen in Richtung parallel zu dem Abstand zwischen den Leisten (11) gleich dem Sollabsabstand zwischen benachbarten Gitterrinnen (1, 2) ist, und
mit Biegeelementen (11), die zum Sichern des Verbindungselementes (3) an den Gitterrinnen (1, 2) um die betreffenden Drähte (5) an der Stoßstelle zumindest teilweise herumbiegbar sind.

5. Verbindungseinrichtung nach Anspruch 4, bei der die Biegeelemente von Verlängerungen der Leisten (11) gebildet sind.

6. Verbindungseinrichtung nach den Ansprüchen 1 oder 4, dadurch gekennzeichnet, daß die Leisten (11) und die Verbindungsplatte (9) ein einstückiges Blechformteil (8) sind.

7. Verbindungseinrichtung nach den Ansprüchen 1 oder 4, dadurch gekennzeichnet, daß die Höhe der Leisten (11) über der Anlagefläche der Verbindungsplatte (9) mindestens gleich dem halben Drahtdurchmesser ist.

8. Verbindungseirichtung nach Anspruch 4, dadurch gekennzeichnet, daß die Verbindungsplatte (9) zwei Laschen (31) aufweist.

9. Verbindungseinrichtung nach Aspruch 1, dadurch gekennzeichnet, daß die Verdrehsicherung (21) die Gestalt eines Vierkants aufweist, der an zwei diametral gegeüberliegenden Ecken abgrundet ist, wobei der Verrundungsradius dem Halbmesser des Gewindeschaftes entspricht.

## Claims

1. Connection means (3) for connecting adjacent lattice ducts (1, 2), which are arranged to abut against each other at the connection and have a wire (5) curved in keeping with the profile of the lattice duct on their face side adjacent to the abutment,
with a connection plate (9), which carries two parallel straight fillets (11) spaced from one another which form a C-shaped profile together with the connection plate (9), and contains an opening (12) in the centre between the fillets (11), wherein the clear space between the fillets (11) is equal to the distance between the wires (5) on the face side adjacent to the abutment, measured over both wires (5),
with a hammer-head bolt (14), which has an elongated head (15), a threaded shank (13) as well as a rotation locking means (21), said threaded shank (13) as well as the rotation locking means (21) having an active diameter equal to the desired distance between the lattice ducts (1, 2), and when the threaded shank (13) is inserted in the opening (12), the head (15) lies on the same side of the connection plate (9) as the fillets (11), and
with a nut (27) screwed onto the threaded shank.

2. Means according to Claim 1, wherein the nut (27) is a self-locking nut.

3. Means according to Claim 1, wherein two tongues are additionally formed on the connection plate (9) which are located with the hole (12) on a straight line.

4. Connection means (3) for connecting adjacent lattice ducts (1, 2), which are arranged to abut against each other at the connection and have a wire (5) curved in keeping with the profile of the lattice duct on their face side adjacent to the abutment,
with a connection plate (9) made of a bent metal sheet (8),
with an abutment surface for the wires (5),
with two parallel straight fillets (11) spaced from one another which form a C-shaped profile together with the connection plate (9) and their clear space from one another is equal to the distance between the wires (5) on the face side adjacent to the abutment, measured over both wires,
with two tongues (31) spaced from one another which are arranged centrally between the fillets (11) and extend in the same direction of the fillets (11), wherein the clear space between one fillet (11) and the adjacent edge (32) of the tongue (31) is equal to the diameter of the wire, and the width of each tongue (31) is equal to the desired distance between adjacent lattice ducts (1, 2), measured in a direction parallel to the space between the fillets (11), and
with bending elements (11), which may be at least partially bent over around the respective wires (5) at the point of abutment to secure the connecting element (3) on the lattice ducts (1, 2).

5. Connection means according to Claim 4, wherein the bending elements are formed by extensions of the fillets (11).

6. Connection means according to Claim 1 or 4, characterised in that the fillets (11) and the connection plate (9) are formed from a Single bent metal sheet part (8).

7. Connection means according to Claim 1 or 4, characterised in that the height of the fillets (11) above the abutment surface of the connection plate (9) is at least equal to half the diameter of the wire.

8. Connection means according to Claim 4, characterised in that the connection plate (9) has two tongues (31).

9. Connection means according to Claim 1, characterised in that the rotation locking means (21) has the shape of a square, which is rounded on two diametrically opposed corners, wherein the radius of curvature corresponds to the radius of the threaded shank.

## Revendications

1. Dispositif de jonction (3) pour assembler des tronçons de chemin de câbles ou tuyaux (1, 2) voisins à structure en treillis qui sont disposés bout-à-bout à la jonction et qui présentent chacun, sur le côté frontal voisin de la jonction, un fil (5) plié en conformité avec le profil du chemin de câble, comprenant :
une plaque de jonction (9) qui porte deux ailes (11) rectilignes, parallèles l'une à l'autre, espacées, formant un profil en C conjointement avec la plaque de jonction (9) et qui présente une ouverture (12) au milieu entre les ailes (11), la distance libre entre les ailes (11) étant égale à la distance hors tout mesurée extérieurement entre les deux fils (5) frontaux voisins à l'endroit de la jonction,
une vis (14) à tête rectangulaire à angles abattus, présentant une tête oblongue (15), une tige filetée (13) réalisée d'une seule pièce avec cette dernière et une partie d'immobilisation en rotation (21), la tige filetée (13) ainsi que la partie d'immobilisation en rotation (21) présentant un diamètre utile qui est égal à la distance nominale entre les tronçons de chemin (1, 2) à l'endroit de la jonction, la tête (15) étant, lorsque la tige filetée (13) est insérée dans l'ouverture (12), située sur le même côté de la plaque de jonction (9) que les ailes (11), et
un écrou (27) vissé sur la tige filetée.

2. Dispositif suivant la revendication 1, dans lequel l'écrou (27) est un écrou autofreiné.

3. Dispositif suivant la revendication 1, dans lequel deux pattes qui se trouvent sur une droite avec l'ouverture (12) sont en plus formées sur la plaque de jonction (9).

4. Dispositif de jonction (3) pour assembler des 5 tronçon de chemin de câbles ou tuyaux (1, 2) voisins à structure en treillies qui sont disposés bout-à-bout à la jonction et présentent chacun, sur le côté frontal voisin de la jonction, un fil (5) plié en conformité avec le profil du chemin de câble, comprenant :
une plaque de jonction (9) constituée d'une pièce de tôle profilée (8),
une surface d'appui pour les fils (5),
deux ailes (11) rectilignes, parallèles l'une à l'autre et espacées, formant conjointement avec la plaque de jonction (9) un profil en C, la distance intérieure entre lesdites ailes étant égale à la distance hors tout mesurée extérieurement entre les deux fils (5) frontaux voisins à l'endroit de la jonction,
deux pattes (31) espacées qui sont disposées au milieu entre les ailes (11) et s'étendent dans la même direction que les ailes (11), la distance libre entre une aile (11) et l'arête voisine (32) de la patte (31) étant égale au diamètre du fil et la largeur de chaque patte (31) mesurée dans une direction parallèle à la distance entre les ailes (11) étant égale à la distance nominale entre deux tronçons de chemin (1, 2) voisins, et
des éléments pliables (11) qui, pour solidariser l'élément de jonction (3) avec les tronçons de chemin (1, 2), peuvent être pliés au moins en partie autour des fils correspondants (5) à la jonction.

5. Dispositif de jonction suivant la revendication 4, dans lequel les éléments pliables sont constitués par des prolongements des ailes (11).

6. Dispositif de jonction suivant les revendications 1 ou 4, **caractérisé** par le fait que les ailes (11) et la plaque de jonction (9) sont constituées par une pièce unitaire de tôle (8) profilée.

7. Dispositif de jonction suivant les revendications 1 ou 4, **caractérisé** par le fait que la hauteur des ailes (11) au-dessus de la surface d'appui de la plaque de jonction (9) est au moins égale au demi-diamètre des fils.

8. Dispositif de jonction suivant la revendication 4, **caractérisé** par le fait que la plaque de jonction (9) présente deux pattes (31).

9. Dispositif de jonction suivant la revendication 1, **caractérisé** par le fait que la partie d'immobilisation en rotation (21) présente la forme d'un carré qui est arrondi sur deux angles diamétralement opposés, l'angle de l'arrondi correspondant au demi-diamètre de la tige filetée.
